(19) Europäisches Patentamt
European Patent Office
Office européen des brevets

(11) Veröffentlichungsnummer: **0 303 089 A1**

(12) # EUROPÄISCHE PATENTANMELDUNG

(21) Anmeldenummer: **88111933.3**

(51) Int. Cl.⁴: **C08L 11/00**

(22) Anmeldetag: **25.07.88**

(30) Priorität: **05.08.87 DE 3725902**

(43) Veröffentlichungstag der Anmeldung: **15.02.89 Patentblatt 89/07**

(84) Benannte Vertragsstaaten: **DE FR GB**

(71) Anmelder: **BAYER AG**
**Konzernverwaltung RP Patentabteilung**
**D-5090 Leverkusen 1 Bayerwerk(DE)**

(72) Erfinder: **Musch, Rüdiger, Dr.**
**Altenberger-Dom-Strasse 169**
**D-5060 Bergisch Gladbach 2(DE)**
Erfinder: **Magg, Hans, Dr.**
**Hän 14**
**D-5067 Kürten(DE)**
Erfinder: **Obrecht, Werner, Dr.**
**Holderberger Strasse 108**
**D-4130 Moers(DE)**
Erfinder: **Müller, Eberhard, Dr.**
**Pfauenstrasse 19**
**D-4047 Dormagen 1(DE)**

(54) **Mischungen aus Chloroprenpolymeren und ihre Herstellung.**

(57) Die Erfindung betrifft Mischungen aus Polychloropren-Elastomeren, die sich durch eine gute Verarbeitbarkeit und hervorragende Kältebeständigkeit auszeichnen und ihre Herstellung.

EP 0 303 089 A1

## Mischungen aus Chloroprenpolymeren und ihre Herstellung

Die Erfindung betrifft Mischungen aus Polychloropren-Elastomeren, die sich durch eine gute Verarbeitbarkeit und hervorragende Kältebeständigkeit auszeichnen und ihre Herstellung. Unter guter Verarbeitbarkeit werden beispielsweise die Maßhaltigkeit der Extrudate sowie hervorragende Oberflächenglätte der Extrudate verstanden.

Eine Möglichkeit, Polychloropren-Elastomere mit vorteilhaften Verarbeitungseigenschaften herzustellen, besteht darin, einem Latex eines toluollöslichen Polychloroprens (Sol-Polymer) den Latex eines vernetzten Polychloroprens (Gel-Polymer) zuzumischen und den Kautschuk beispielsweise durch Gefrierkoagulation zu isolieren.

Der Zusatz eines solchen Gel-Polymeren zu einem Sol-Polymeren hatte bisher den Nachteil, daß die Tieftemperaturbeständigkeit der Vulkanisate verschlechtert wurde.

Um den steigenden Anforderungen an Polychloropren-Vulkanisate im Außeneinsatz bei lang anhaltenden tiefen Temperaturen gerecht zu werden, ist es notwendig, auch die Kristallisationstendenz über den bisher erreichten Stand hinaus zu vermindern.

Ziel der vorliegenden Erfindung ist es, die Kältebeständigkeit von Chloroprenkautschuken über das bisherige Maß hinaus unter Beibehaltung der übrigen vorteilhaften Eigenschaften zu verbessern.

Es wurde nun gefunden, daß die vorteilhaften Verarbeitungseigenschaften der Sol-Gel-Mischungen erhalten bleiben, gleichzeitig aber die Kristallisationsbeständigkeit der Mischungen und Vulkanisate deutlich besser werden, wenn man die beiden für die Mischungen nötigen Latices durch Polymerisation von Chloropren in Gegenwart verschiedener Comonomere herstellt und bei der gelhaltigen Polymerkomponente gleichzeitig darauf achtet, daß eine bestimmte Vernetzungsdichte des Gels nicht unterschritten wird.

Als Comonomer zur Herstellung des Sol-Polymers eignen sich halogen- und alkylsubstituierte Butadiene, Styrol, Acrylsäureester oder 1-Chlorbutadien, wobei 2,3-Dichlorbutadien und 1-Chlorbutadien besonders bevorzugt sind.

Die bevorzugten Ausgangsmonomeren können in folgenden Mengen eingesetzt werden:

Chloropren: 82-98, vorzugsweise 88-96 Gew.-Teile
2,3-Dichlorbutadien: 1-12, vorzugsweise 3-8 Gew.-Teile
1-Chlorbutadien: 0,1-6, vorzugsweise 1-4 Gew.-Teile

Je nach vorgesehener Anwendung des Polymeren werden die Monomeren zu 50 bis 99 % umgesetzt, wobei für Festkautschuke zur Erzielung vorteilhafter anwendungstechnischer Werte Umsätze zwischen 60 und 80 % angemessen sind.

Durch Zugabe bekannter, als Regler wirksamer Verbindungen, z. B. Mercaptane, lassen sich die Struktur und die Eigenschaften der Polymeren in weiten Grenzen variieren.

In einer bevorzugten Ausführungsform, insbesondere wenn gelfreie Polymerisate hergestellt werden sollen, wird der Regler zu Polymerisationsbeginn und während der Polymerisation gestaffelt zugesetzt.

Bevorzugte Kettenübertragungsmittel sind aliphatische Mercaptane, insbesondere solche mit 8 bis 18 Kohlenstoffatomen. Die Mercaptane können geradkettig oder verzweigt sein. So können primäre, sekundäre und tertiäre Mercaptane verwendet werden, das bevorzugteste Mercaptan ist jedoch n-Dodecylmercaptan. Auch andere bekannte Kettenübertragungsmittel, beispielsweise aromatische Disulfide oder Alkylxanthogendisulfide mit 1 bis 12 Kohlenstoffatomen in der Alkylgruppe oder heterocyclische Ringverbindungen an Stelle der Alkylgruppen wie Bis-(5-ethyl-1,3-dioxan-5-yl-methyl)-xanthogendisulfid können verwendet werden.

Nicht umgesetzte organische Verbindungen lassen sich nach der Reaktion nicht Wasserdampfdestillation (Strippen), beispielsweise bei 50° C und einem absoluten Druck von 20 Torr entfernen.

Die in den folgenden Beispielen beschriebenen Polymerisationsversuche wurden zur Erzielung besonders definierter Reaktionsbedingungen in einer kontinuierlich betriebenen 6-Kessel-Kaskade durchgeführt.

Diese kontinuierliche Polymerisation von Chloropren ist aus den US-Patentschriften 2 384 277, 2 394 291 und 2 831 842 bekannt.

Das Monomer, inclusive Stabilisator und Regler, wurde in der Emulgator und Ätznatron enthaltenen wäßrigen Phase voremulgiert und gelangte dann in das Reaktionsgefäß, in das zusätzlich der Initiator eindosiert wurde. Es kann aber auch ohne Voremulgierung gearbeitet werden.

Nach dem Austritt aus der Rührkesselkaskade wurde die Reaktion durch Zugabe von Diethylhydroxylamin und gleichzeitigem Entzug des Monomeren abgebrochen.

Zur Herstellung des Gel-Polymeren können verschiedene Methoden angewandt werden, wie sie

beispielsweise in

DE-AS 12 29 716, US-PS 31 47 318, DE-AS 12 48 921,
DE-AS 12 71 990, DE-OS 15 70 089, DE-OS 17 95 187,
DE-OS 17 70 651, DE-OS 20 08 673, DE-OS 17 20 107

beschrieben sind.

Bevorzugt ist die Herstellung des Gel-Polymeren durch Copolymerisation von Chloropren, einem bifunktionellen Monomeren wie z. B. Diester aus zweiwertigen Alkoholen und Acrylsäuren sowie gegebenenfalls weiteren Monomeren wie sie bei der Herstellung des Sol-Polymeren bereits beschrieben worden sind.

Besonders bevorzugt sind Diester der allgemeinen Formel

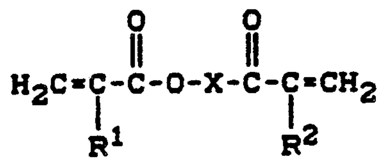

worin unabhängig voneinander
$R^1$ und $R^2$ Wasserstoff oder $C_1$-$C_4$-Alkyl und

X 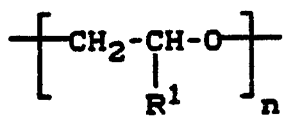 oder 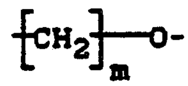

mit $1 \leq n \leq 10$ und $2 \leq m \leq 10$ bedeuten.

Der Diester wird vorzugsweise in einer Menge von 2 bis 3 Mol-% eingesetzt. Bevorzugter Diester ist Ethylenglykoldimethacrylat.

Besonders bevorzugte, unter den üblichen Bedingungen nicht vernetzende Comonomere sind 2,3-Dichlorbutadien und 1-Chlorbutadien, die in einer Konzentration von 0-10 Gew.-Teilen (2,3-Dichlorbutadien) und 0-4 Gew.-Teilen (1-Chlorbutadien), bezogen auf 100 Teile Chloropren zu Polymerisationsbeginn anwesend sein können.

Die Polymerisation und Isolierung dieses Latex wird entsprechend der Herstellung des Sol-Latex durchgeführt, wobei es ein wesentliches Erfindungsmerkmal ist, ein Gelpolymerisat mit einer bestimmten Mindestvernetzungsdichte herzustellen. Ein Maß für die Ermittlung der Vernetzungsdichte ist der Quellindex.

Man bestimmt ihn, indem man das Polymer in einem Becher (B) mit Toluol im Gewichtsverhältnis 1:250 versetzt und 24 Stunden bei Raumtemperatur unter Rühren löst. Der unlösliche Anteil wird anschließend 60 min bei 25.000 Upm zentrifugiert, die überstehende Lösung dekantiert, das unlösliche feuchte Polymerisat mit dem Becher gewogen (BGF).

Die Trocknung im Becher erfolgt bei 60 °C im Vakuum bis zur Gewichtskonstanz, danach wird wieder das Gewicht ermittelt (BGT). Aus den so erhaltenen Daten wird nach folgender Formel der Quellindex (Q) bestimmt.

$$\frac{BGF - BGT}{BGT - B} = Q$$

Bei der erfindungsgemäßen Mischung von Polychloropren-Elastomeren soll der Quellindex der Gelkomponente $\leq 12$ sein. Bevorzugt wird ein Quellindex von 5-10.

Die erfindungsgemäß hergestellten Latices werden im Gewichtsverhältnis "Sol-Polymer" zu "Gel-Polymer" wie 1 zu 4 bis 9 zu 1 gemischt, der pH-Wert der alkalischen Latexmischungen durch verdünnte Essigsäure auf pH 6,5 gesenkt und das Polymer aus dieser Emulsion durch Gefrierkoagulation isoliert und getrocknet (Chem. Engng. Prog. 43, 391 (1974); DE-PS 1 051 506).

Bei diesem bekannten Verfahren koaguliert der Latex auf einer in dem Latex sich drehenden gekühlten Walze. Die auf der Walzenoberfläche entstandene eishaltige Kautschukfolie wird abgehoben und über ein Waschband geführt, wo das Eis wieder aufgetaut wird. Die nasse Folie läuft anschließend durch Quetschrollen, wird teilweise entwässert und gelangt mit einem Wassergehalt von etwa 30 Gew.-% in den Etagentrockner. Dort durchläuft das Polymerband, jeweils über Umlenkrollen geleitet, mehrere übereinanderliegende Etagen, wo es mit Heißluft getrocknet wird. Die Folie verläßt anschließend den Trockner, wird zu einem Strang zusammengeführt und in gewünschte Teilstücke geschnitten.

Gegenstand der Erfindung sind daher auch feste Polychloroprenmischungen aus Sol- und Gelpolymer, dadurch gekennzeichnet, daß die Solkomponente aus einem Copolymerisat aus Chloropren und 1-12 Gew.-% 2,3-Dichlorbutadien, bezogen auf die Gesamtmenge an ungesättigten Verbindungen des Solpolychloroprens, besteht, wobei bis zu 6 Gew.-% des Chloroprens durch andere Comonomere ersetzt sein können und die Gelkomponente aus einem Copolymerisat aus Chloropren, 0-10 Gew.-% 2,3-Dichlorbutadien, bezogen auf die Gesamtmenge an ungesättigten Verbindungen des Gelpolychloroprens und 7,5 • $10^{-3}$ bis 4,0 • $10^{-2}$ Mol, bezogen auf 100 g Gesamtmonomermenge des Gelpolychloroprens, einer Verbindung der allgemeinen Formel

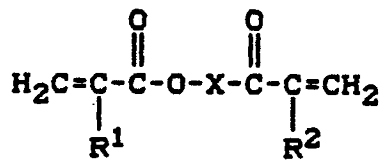

besteht,
worin unabhängig voneinander
$R^1$ und $R^2$ Wasserstoff oder $C_1$-$C_4$-Alkyl und

X 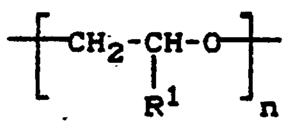 oder 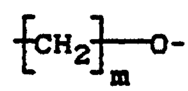

mit 1 ≦ n ≦ 10 und 2 ≦ m ≦ 10 bedeuten,
wobei bis zu 4 Gew.-% des Chloroprens durch andere Comonomers ersetzt sein können.

Als weitere Comonomere sowohl des Sol- als auch des Gelpolymeren kommen insbesondere 1-Chlorbutadien und Schwefel infrage.

Die Herstellung der festen Polychloroprenmischungen erfolgt bevorzugt durch Mischen der als Latex vorliegenden Komponenten und gegebenenfalls Zusatz von Stoffen, die die Lagerstabilität des Polymeren verbessern, woran sich die Koagulation anschließt.

Die Mischungen enthalten Sol- und Gel-Komponente vorzugsweise im Gewichtsverhältnis 9:1 bis 1:4. Die Kristallisationshalbwertszeiten der festen Kautschukmischungen (bei einem Gelgehalt von 40 %) sollen vorzugsweise >50 h sein, wobei eine Kristallisationshalbwertszeit >100 h besonders bevorzugt ist.

Die Ermittlung der Kristallisationshalbwertszeit erfolgt nach der von M. Hoffman beschriebenen Methode bei -10 °C im Dilatometer (Makromol. Chem. 126, (1969), S. 186 bis 203).

Unter den dort beschriebenen Meßbedingungen hat eine erfindungsgemäße Kautschukmischung, die einen Gelgehalt von 40 % hat, im allgemeinen eine Kristallisationshalbwertszeit von >50 h, wobei eine Kristallisationshalbwertszeit von >100 h bevorzugt ist. Die Kristallisationshalbwertszeiten von Mischungen mit anderen Gelgehalten verändern sich entsprechend.

Bevorzugter Diester ist Ethylenglykoldimethacrylat. Das Gelpolymerisat soll im allgemeinen nach dem Aufarbeiten zum Festkautschuk einen Quellindex in Toluol von ≦ 12, bevorzugt 5-10 haben. Die Erfindung soll im folgenden beispielhaft erläutert werden.

Die Beispiele 14-16 beschreiben erfindungsgemäße Mischungen. Die Beispiele 1-3 beschreiben die Herstellung der Sol-Komponenten, die Beispiele 4-7 die der Gel-Komponente.

Beispiel 1 (Sol Polymer)

In den ersten Reaktor einer Polymerisationskaskade, bestehend aus 6 gleichen Reaktoren mit einem Volumen von je 50 Liter wurde die wäßrige Phase (W) und die Monomerphase (M) über eine Meß- und Regelapparatur in stets konstantem Verhältnis eingefahren. Die mittlere Verweilzeit je Kessel betrug 30 Minuten. Die Aktivatorphase A wurde im 2. Reaktor (1. Polymerisationskessel) zudosiert. Die Zahlenangaben sind Gewichtsteile pro Zeiteinheit. Die tatsächlichen Mengen ergeben sich aus der Rezeptur, den Dichten der einzelnen Phasen, dem Reaktorvolumen das geflutet gefahren wurde, und der mittleren Verweilzeit.

Monomerphase M:

Chloropren 100,0
n-Dodecylmercaptan 0,22

Wäßrige Phase W:

Entsalztes Wasser 130,0
Natriumsalz einer disproportionierten Abietinsäure 4,5
Natriumsalz eines Kondensationsproduktes aus Naphthalinsulfonsäure und Formaldehyd 0,7
Ätznatron 0,65

Aktivatorphase A:

3 gew.-%ige wäßrige Formamidinsulfinsäurelösung (kontinuierlicher Zulauf) 0,30

Bei einer Innentemperatur von 48 °C sprang die Reaktion im 1. Polymerisationskessel an. Durch eine Außenkühlung wurde die freiwerdende Polymerisationswärme abgeführt und die Polymerisationstemperatur auf 45 °C erniedrigt. Entsprechend zum Zulauf in dem ersten Kessel durchläuft das Reaktionsgemisch die Rührkesselkaskade. Bei einem Monomerumsatz von 66 % wurde die Reaktion durch Zugabe von Diethylhydroxylamin abgebrochen. Das restliche Monomer wurde durch Wasserdampfdestillation aus dem Polymeren entfernt und der Polymerlatex bei 10 °C gelagert.

Beispiele 2 und 3 (Sol-Polymer, geänderte Monomerphase)

Man verfährt analog Beispiel 1, setzt jedoch andere Monomerphasen ein.

Monomerphase M:

| Beispiel | 2 | 3 |
|---|---|---|
| Chloropren | 96,0 | 92,0 |
| 2,3-Dichlorbutadien (DCB) | 4,0 | 8,0 |
| n-Dodecylmercaptan | 0,22 | 0,22 |

Beispiel 4 (Gel-Polymer)

Man verfährt analog Beispiel 1 mit folgenden Mengen:

Monomerphase M:

Chloropren 96,0 g
Ethylenglykoldimethylacrylat (EGDM) 4,0 g
n-Dodecylmercaptan 0,3 g

Wäßrige Phase W:

Entsalztes Wasser 130,0 g
Natriumsalz der disproportionierten Abietinsäure 3,5 g
Natriumsalz eines Kondensationsproduktes aus Naphthalinsulfonsäure und Formaldehyd 0,7 g
Ätznatron 0,4 g

Aktivatorphase A:

3 %ige wäßrige Formamidinsulfinsäurelösung (kontinuierlicher Zulauf) 0,41

Bei einem Monomerumsatz von 80 % wird die Reaktion durch Zugabe von Diethylhydroxylamin abgebrochen. Das restliche Monomer wird durch Wasserdampfdestillation aus dem Polymeren entfernt. Der Polymerlatex wird bei + 10 °C gelagert.

Beispiele 5-7 (Gel-Polymer, geänderte Monomerphase)

Man verfährt wie im Beispiel 4, setzt jedoch eine Monomerphase folgender Zusammensetzung ein:

| Beispiel | 5 | 6 | 7 |
|---|---|---|---|
| Chloropren | 95,0 | 91,0 | 87,0 |
| EGDM | 5,0 | 5,0 | 5,0 |
| DCB | 0 | 4,0 | 8,0 |
| n-Dodecylmercaptan | 0,2 | 0,2 | 0,2 |

Beispiele 8-18

Die Latices der Gel-Polymerisate wurden unter Rühren bei Raumtemperatur gemischt und der Kautschuk durch Gefrierkoagulation isoliert. Die beiden Mischkomponenten wurden so dosiert, daß der Kautschuk 40 ± 1 Gew.-% Gel enthielt. Die relevanten Daten sind in der folgenden Tabelle zusammengestellt.

| Bsp. | Mischkomponenten | | Rohmaterial | | Mischung Extrusion Oberflächenbeschaffenheit | Vulkanisat Druckverformungsrest (DV) | |
|---|---|---|---|---|---|---|---|
| | Sol-Polymer aus Bsp. | Gel-Polymer aus Bsp. | Quellindex (%) | Kirstallisation Rohmaterial(h) | | 0 °C % | -10 °C % |
| 8 | 1 | 4 | 15 | 13 | 2-3 | 91 | 99 |
| 9 | 2 | 4 | 16 | 28 | 2-3 | 78 | 91 |
| 10 | 3 | 4 | 18 | 80 | 3 | 33 | 65 |
| 11 | 1 | 5 | 7 | 9 | 1 | 84 | 96 |
| 12 | 1 | 7 | 8 | 15 | 1 | 85 | 92 |
| 13 | 2 | 5 | 8 | 21 | 1 | 88 | 96 |
| 14 | 2 | 7 | 8 | 90 | 1 | 26 | 55 |
| 15 | 3 | 7 | 9 | 290 | 1 | 21 | 32 |
| 16 | 3 | 6 | 9 | 150 | 1 | 21 | 33 |
| 17 | 1 | 0 | - | 8 | 5 | 99 | 100 |
| 18 | 2 | 0 | - | 325 | 5 | 17 | 27 |

Die Beispiele 14-16 sind erfindungsgemäß, die Beispiele 8-13 und 17-18 stellen Vergleichsversuche dar.

Bestimmung der Kristallisation:

Sie erfolgte wie in DIN 53 541 beschrieben.

Ermittlung der Oberflächenbeschaffenheit:

Die günstigere Oberflächenbeschaffenheit der erfindungsgemäßen Polymeren wird durch einen praxisnahen Test belegt. In einem Laborkneter werden innerhalb von 4 min. die nachstehenden Substanzen zunächst gemischt:

Polymer (Beispiel 8-18) 1.000 g
Ruß N-990 250 g
Ruß N-539 250 g
aromat. Mineralöl 150 g
Phenyl-ß-naphthylamin 20 g
Magnesiumoxid 40 g
Ozonschutzwachs 10 g
Stearinsäure 10 g

Die Mischungen wurden danach bei 30 °C 3 min auf der Walze verschnitten.

Nach einer Lagerungszeit von ca. 24 Stunden bei Raumtemperatur werden die Mischungen in einem Brabender-Plastograph extrudiert.

Spritzbedingungen:

| Gerät | 10-D-Schnecke, ø 19 mm zweigängig, normal |
|---|---|
| Spritzprofil | Garvey |
| Schneckendrehzahl | 40 $min^{-1}$ |
| Eingangstemperatur | 50 °C |
| Zylindertemperatur | 70 °C |
| Kopftemperatur | 90 °C |
| ø Düse | 4,35 mm |
| Düseneinlauf | 75° |
| Mischungsmenge | 200 g |

Die Bewertung der Oberflächenbeschaffenheit erfolgt nach folgender Mustervorlage:

Vulkanisatprüfung

Die Mischungsherstellung, Vulkanisation und Vulkanisatprüfung erfolgt unter Anlehnung an die ISO-Vorschrift 2475-1975 (E).

Vor der eigentlichen Mischungsherstellung werden 1.000 g Polychloropren 6 min. lang mastiziert, wobei der Walzenspalt so eingestellt ist, daß sich ein Wulst mit einem Durchmesser von ca. 12 mm bildet. Nach der Mastikation werden 800 g Kautschuk abgenommen und mindestens 10, höchstens 120 min. lang bei Raumtemperatur gelagert.

Walzwerk 200 x 390 mm
Temperatur 45 - 55 °C
Friktion 1 : 1,4 (24 : 34 U/min)

Vor Beginn des Mischens wird das auf 30 °C eingestellte Walzwerk mittels Abfallkautschuk auf die angegebene Untergrenze der Betriebstemperatur erwärmt.

Prüfmischung

| Mischungsbestandteile | |
|---|---|
| Polychloropren | 100,00 g |
| Stearinsäure | 0,50 g |
| Magnesiumoxid | 4,00 g |
| Phenyl-β-naphthylamin | 2,00 g |
| Ruß N-762 | 30,00 g |
| Zinkoxid | 5,00 g |
| Ethylenthioharnstoff | 0,50 g |
| | 142,00 g |

Mischfolge und -zeiten entsprechen der genannten Angaben. Nach einer Mischzeit von 13 min wird das Walzfell unter wechselseitigem Einschneiden (dreimal links und dreimal rechts) 1 min bearbeitet und innerhalb weiterer 2 min sechsmal durch einen 0,8 mm weiten Walzenspalt gezogen, so daß sich eine Gesamtmischzeit von 16 min ergibt.

Die Mischung wird bis zur Vulkanisation 15 Stunden gelagert.

Vulkanisationsbedingungen:

Temperatur 150 °C

Zeit 40 min

Die Bestimmung des Druckverformungsrestes erfolgt nach DIN 53 517 bei 0 und -10 °C.

Das Prüfverfahren nach dieser Norm dient zur Bestimmung des Kälteverhaltens von Elastomeren unter konstanter Druckverformung.

Der Druckverformungsrest DV unter konstanter Verformung gibt an, welcher Verformungsteil eines Probekörpers zu einem bestimmten Zeitpunkt nach Entspannung, bezogen auf die Zusammendrückung, zurückgeblieben ist.

Der DV wird in % nach folgender Zahlenwertgleichung errechnet:

$$DV = \frac{h_0 - h_2}{h_0 - h_1} \cdot 100$$

Hierin bedeuten:

$h_0$ ursprüngliche Höhe der Probekörper

$h_1$ Höhe der Probekörper in verformtem Zustand bzw.

$h_2$ Höhe der Probekörper nach Entspannung von bestimmter Dauer

Die erfindungsgemäß hergestellten Polymeren (Beispiele 14-16) zeigen gegenüber den Sol- bzw. Sol-Gel-Abmischungen der Vergleichsbeispiele eine günstigere Oberflächenbeschaffenheit der Extrudate in Kombination mit einem ausgezeichneten Tieftemperaturverhalten der Vulkanisate.

## Ansprüche

1. Polychloroprenmischungen aus Sol- und Gel-Polymer, dadurch gekennzeichnet, daß die Solkomponente aus einem Copolymerisat aus Chloropren und 1-12 Gew.-% 2,3-Dichlorbutadien, bezogen auf Gesamtmenge an ungesättigten Verbindungen des Solpolychloroprens, besteht, wobei bis zu 6 Gew.-% des Chloroprens durch andere Comonomere ersetzt sein können und die Gelkomponente aus einem Copolymerisat aus Chloropren, 0-10 Gew.-% 2,3-Dichlorbutadien, bezogen auf Gesamtmenge an ungesättigten Verbindungen des Gelpolychloroprens, und $7{,}5 \bullet 10^{-3}$ bis $4{,}0 \bullet 10^{-2}$ Mol, bezogen auf 100 g Gesamtmonomermenge des Gelpolychloroprens, einer Verbindung der allgemeinen Formel

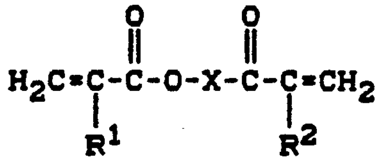

besteht, worin unabhängig voneinander
$R^1$ und $R^2$ Wasserstoff oder $C_1$-$C_4$-Alkyl und

X 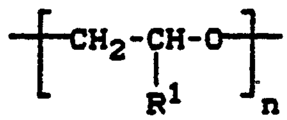 oder 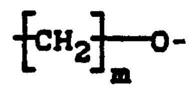

mit $1 \leq n \leq 10$ und $2 \leq m \leq 10$ bedeuten,
wobei bis zu 4 Gew.-% des Chloroprens durch andere Comonomere ersetzt sein können.

2. Polychloroprenmischungen nach Anspruch 1, worin $R^1$ und $R^2$ Methyl und X $-CH_2-CH_2-O-$ bedeuten.

3. Polychloroprenmischungen nach Anspruch 1, worin als Comonomer 1-Chlorbutadien verwendet wird.

4. Polychloroprenmischungen nach Anspruch 1, dadurch gekennzeichnet, daß die Sol- und Gelkomponente im Gewichtsverhältnis 9 : 1 bis 1 : 4 enthalten.

5. Polychloroprenmischungen nach Anspruch 1, dadurch gekennzeichnet, daß das Gelpolymerisat einen Quellindex in Toluol von $\leq 12$ aufweist.

6. Polychloroprenmischungen nach Anspruch 1, dadurch gekennzeichnet, daß das Rohmaterial bei einem Gelgehalt von 40 % eine Kristallisationshalbwertszeit bei -10 °C von $\geq 50$ Stunden hat.

7. Verwendung der Polychloroprenmischungen nach Anspruch 1 zur Herstellung von Vulkanisaten.

Bewertung

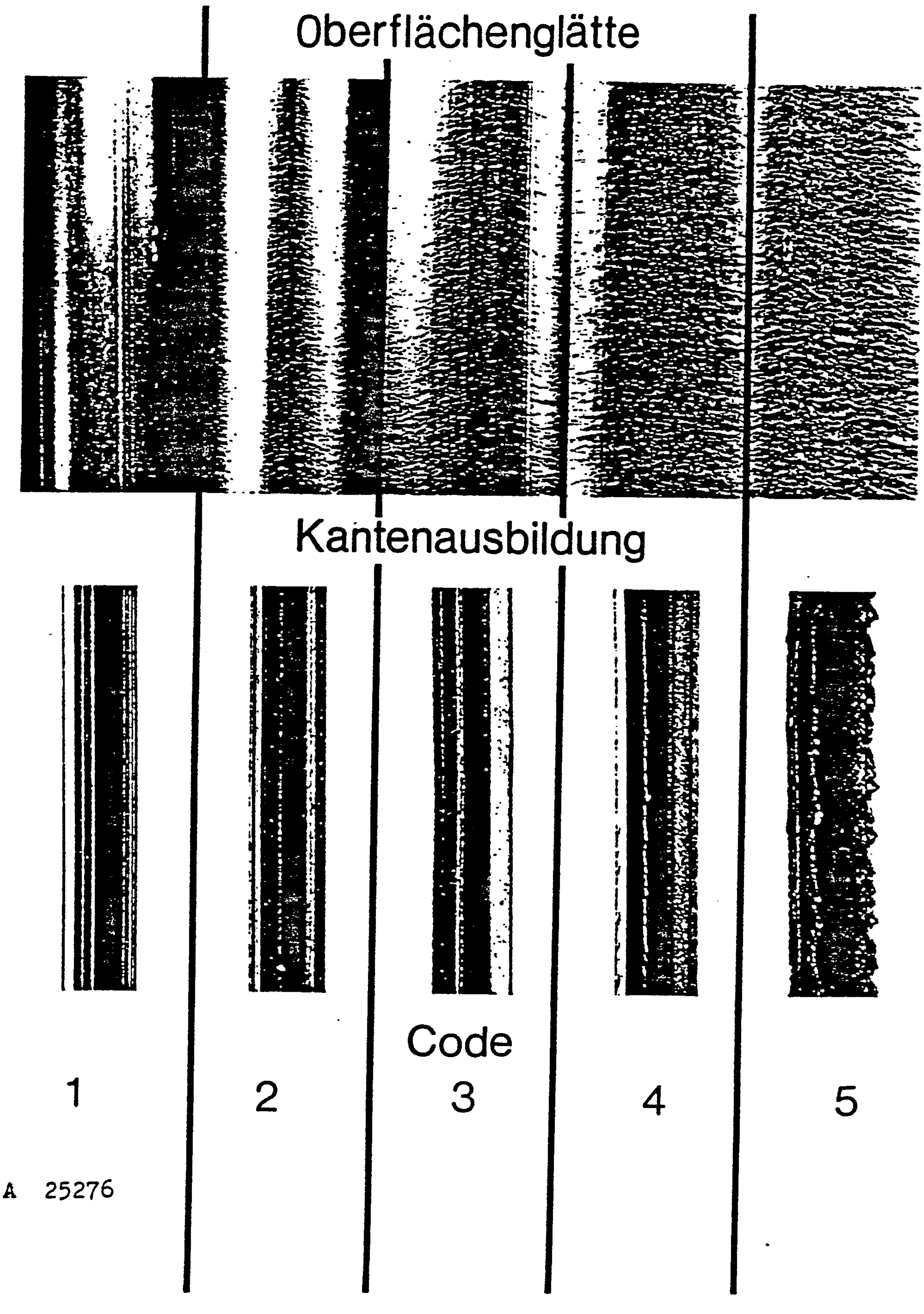

Europäisches Patentamt

# EUROPÄISCHER RECHERCHENBERICHT

Nummer der Anmeldung

EP 88 11 1933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 533 223 (BAYER)<br>* Ansprüche 1-6; Beispiel 1 *<br>--- | 1-7 | C 08 L 11/00 |
| X | FR-A-2 220 542 (BAYER)<br>* Ansprüche 1,4,10 *<br>--- | 1-7 | |
| X | US-A-3 876 732 (C. KITAGAWA et al.)<br>* Ansprüche 1,5 *<br>----- | 1-7 | |

| RECHERCHIERTE SACHGEBIETE (Int. Cl.4) |
|---|
| C 08 L |

Der vorliegende Recherchenbericht wurde für alle Patentansprüche erstellt

| Recherchenort | Abschlußdatum der Recherche | Prüfer |
|---|---|---|
| DEN HAAG | 14-11-1988 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)